# EUROPEAN PATENT SPECIFICATION

(11) **EP 2 015 548 B1**
(45) Date of publication and mention of the grant of the patent: **24.02.2010**
(21) Application number: 07110788.2
(22) Date of filing: 21.06.2007
(51) Int. Cl.: H04M 1/725, H01Q 1/24, H01Q 1/44, H01Q 19/00

(54) **Mobile wireless communications device including electrically conductive, electrically floating beam shaping elements and related methods**
Mobile drahtlose Kommunikationsvorrichtung mit elektrisch leitenden und elektrisch schwebenden Strahlformungselementen und entsprechende Verfahren
Dispositif de communications sans fil mobiles incluant des éléments de formations de faisceau électriquement flottant et électriquement conducteur et procédés correspondants

(43) Date of publication of application: 14.01.2009
(73) Proprietor: Research In Motion Limited, Waterloo, Ontario N2L 3W8 (CA)
(72) Inventor: Qi, Yihong, St. Agatha, Ontario N0B 2L0 (CA); Man, Ying Tong, Waterloo, Ontario N2V 2V8 (CA); Jarmuszewski, Perry, Waterloo, Ontario N2V 2R6 (CA); Wennemer, Dietmar, Waterloo, Ontario N2V 5N2 (CA)
(74) Representative: Roberts, Gwilym Vaughan

(56) References cited:
- EP-A- 1 359 639
- EP-A- 1 475 858
- WO-A-03/085778
- WO-A-2004/021511
- GB-A- 2 340 309
- US-A- 6 028 555
- US-A1- 2003 160 726
- CHEUNSOO HA ET AL: "A modified quasi-yagi planar antenna with wideband characteristics in c-band" IEEE ANTENNAS AND PROPAGATION SOCIETY INTERNATIONAL SYMPOSIUM. 2001 DIGEST. APS. BOSTON, MA, JULY 8 - 13, 2001, NEW YORK, NY : IEEE, US, vol. VOL. 1 OF 4, 8 July 2001 (2001-07-08), pages 154-157, XP010564253 ISBN: 0-7803-7070-8

## Description

### Field of the Invention

The present invention relates to the field of communications devices, and, more particularly, to mobile wireless communications devices and related methods.

### Background

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device manufacturers is designing antennas that provide desired operating characteristics within the relatively limited amount of space available for the antenna.

One approach for reducing phone size is to use flip phones having top and bottom housings connected with a hinge. The housings may be closed when the phone is not in use so that it is more compact and easier for a user to carry. One exemplary antenna system for a flip style cellular phone is described in U.S. Patent No. 6,765,536. In particular, the antenna system includes an external antenna element carried on the top of the lower housing, and a parasitic element carried by the top housing so that when the phone is flipped open the parasitic element is in close proximity to the antenna element. A tuning circuit carried by the lower housing is electrically coupled to the parasitic element. The tuning circuit is variable to adjust the parasitic load on the antenna element to provide variable operating frequencies and bandwidths for the phone.

External cell phone antennas are advantageous in that they are spaced apart from the user's head, which makes it easier for phone manufacturers to comply with applicable specific absorption rate (SAR) requirements, for example. This is because the farther the radiating element of the cell phone antenna system is from the user, the less intense the radiation exposure to the user. Yet, many users prefer internal antennas over external antennas, as external antennas are prone to catch on objects and become damaged, for example. Yet, with the ever increasing trend towards smaller cell phone sizes, for a relatively small phone having an internal antenna, this may place the antenna in relatively close proximity to the user's ear, which may make complying with applicable SAR and/or hearing aid compatibility (HAC) requirements potentially difficult for manufacturers.

One exemplary mobile phone configuration that attempts to address radiation concerns from an internal antenna is set forth in PCT Publication No. WO/2004/021511 A2. The device includes a casing including a first in-built driven antenna element extending a length along a longest side of the casing. Either the portable communication device or the case includes at least one passive beam directive element distanced from and generally extending along at least most of the same length as the first in-built driven antenna element. Because of this, electromagnetic radiation generated by the first in-built driven antenna element is enhanced in a direction away from a side of the casing intended to be facing a user.

Despite the existence of such configurations, further improvements may be desirable in certain applications, particularly where the form factor of the device housing does not provide adequate space for such arrangements.

European patent application no. 1359639 is directed to an unbalanced feeding antenna element, which is fed power from one end and placed on the upper surface of a circuit substrate. A passive element has both of its ends open and is set to a length corresponding to a predetermined frequency. The passive element is substantially parallel to the unbalanced feeding element on the circuit substrate at a distance of approximately 1/10 or less of a wavelength at a frequency used for transmission/reception. This suppresses the antenna current flowing into the circuit substrate to a minimum level and makes radiation from the passive element dominant compared to radiation from the circuit substrate. This makes it possible to suppress a reduction in the antenna gain caused by the human body when the user uses the communication terminal apparatus.

UK patent application no. 2340309 is directed to a planar broadband dipole antenna including a grounded conductor plate, a radiation plate placed over the grounded conductor plate, where the radiation plate has printed patterns formed on both sides, and a dielectric interposed between the grounded conductor plate and the radiation plate. Each of the upper and lower surfaces of the radiation plate includes a dipole element for radiating waves, and a feeder for feeding radio frequency signals.

The article by Cheunsoo et al. entitled "A Modified Quasi-Yagi Planar Antenna with Wideband Characteristics in C-Band" IEEE ANTENNAS AND PROPAGATION SOCIETY INTERNATIONAL SYMPOSIUM 2001 DIGEST APS. BOSTON, MA, July 8-13 2001 (IEEE, US, Vol. 1 of 4, pages 154-157) is directed to a planar microstrip-fed quasi-Yagi antenna. A C-band prototype antenna measures 50% bandwidth (S11 < -10 dB) and higher gain (6.5 dB) than the original quasi-Yagi design, The antenna radiates a well-defined endfire beam, with a front-to-back ratio > 20 dB and cross polarization level below -18 dB.

US Patent 6028555 is directed to a replaceable battery cover that can be detachably mounted on a battery storage portion formed in the housing of mobile terminal equipment. A linear or plate-like antenna conductor having an antenna element pattern is joined to the inner surface of the battery cover by using one of joining means including embedding, boding, welding, and fitting means. The battery cover is mounted on the storage portion to electrically connect the antenna conductor to a radio circuit in the housing. In this case, by changing the arrangement of the antenna conductor, the antenna can be replaced with a loop antenna, a zigzag antenna, a helical antenna, or a microstrip antenna in accordance with a specific battery cover. In addition, the device may have an external antenna connection terminal to which an external antenna can be connected or an external interface section.

European patent application no. EP 1475858 is directed to an antenna unit and a portable radio device capable of attaining a wider bandwidth and a lower SAR. An antenna element that has an effective length corresponding to a half wavelength of a transmitting frequency and a parasitic element that has an effective length corresponding to a half wavelength of a receiving frequency are provided. An antenna current is induced in the antenna element at the transmitting frequency upon transmitting a radio wave in a predetermined transmitting frequency band, and another antenna current is induced in the parasitic element by a spatial coupling between the antenna element and the parasitic element at the receiving frequency upon receiving the radio wave in a predetermined receiving frequency band, whereby peak points in an antenna current distribution are scattered into two points.

### Brief Description of the Drawings

FIG. 1 is a perspective view of a mobile wireless communications device in accordance with one exemplary embodiment next to a user wearing an electronic hearing aid.

FIG. 2 is a schematic front view of the PCB and electrically floating, electrically conductive antenna beam shaping elements of the mobile wireless communications device of FIG. 1.

FIG. 3 is a schematic rear view of the PCB and electrically floating, electrically conductive antenna beam shaping elements of the mobile wireless communications device of FIG. 1.

FIG. 4 is a schematic rear view of the portable housing and removable battery access panel of the mobile wireless communications device of FIG. 1.

FIG. 5 is a schematic front view of the PCB and electrically floating, electrically conductive antenna beam shaping elements of an alternative embodiment of the mobile wireless communications device of FIG. 1.

FIG. 6 is a schematic front view of the PCB and electrically floating, electrically conductive antenna beam shaping elements of yet another alternative embodiment of the mobile wireless communications device of FIG. 1.

FIG. 7 is a side view of the PCB and electrically floating, electrically conductive antenna beam shaping elements of the device of FIG. 6.

FIG. 8 is a schematic block diagram illustrating additional exemplary components of the mobile wireless communications device of FIG. 1.

### Detailed Description of the Preferred Embodiments

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements in alternative embodiments.

Generally speaking, a mobile wireless communications device is disclosed herein which may include a portable housing, a printed circuit board (PCB) carried within the portable housing, wireless transceiver circuitry carried by the PCB within the portable housing, and an antenna carried by the PCB within the portable housing and connected to the wireless transceiver circuitry. The device may further include a first pair of electrically floating, electrically conductive, spaced apart, antenna beam shaping elements adjacent the antenna and spaced apart therefrom. In addition, a second pair of electrically floating, electrically conductive, spaced apart, antenna beam shaping elements may be adjacent the antenna and spaced apart therefrom. More particularly, the first pair of antenna beam shaping elements are positioned in an offset relationship relative to the second pair of antenna beam shaping elements.

Each of the first pair of antenna beam shaping elements has a first length, and each of the second pair of antenna beam shaping elements has a second length greater than the first length. Additionally, the first and second pairs of beam shaping elements may each be symmetrically positioned with respect to the antenna.

In accordance with one aspect, the first pair of antenna beam shaping elements may be positioned in a vertically offset relationship relative to the second pair of antenna beam shaping elements. More particularly, the first and second pairs of beam shaping elements may at least partially overlap.

The first and second pairs of beam shaping elements may also be co-planar in some embodiments. Furthermore, the first pair of antenna beam shaping elements may be positioned in a laterally offset relationship relative to the second pair of antenna beam shaping elements. Also, the first pair of antenna beam shaping elements has respective ends extending beyond respective ends of the second pair of antenna beam shaping elements.

At least one of the first and second pairs of beam shaping elements is secured to a surface of the portable housing. Furthermore, each of the antenna beam shaping elements may comprise at least one generally rectangular metal layer. In addition, mobile wireless communications device may further include a battery carried within the portable housing and connected to the PCB, and the portable housing may comprise a battery access panel to which at least one of the first and second pairs of beam shaping elements is secured. Also, the PCB may have a top portion and a bottom portion, and the antenna may be carried by the bottom portion of the PCB.

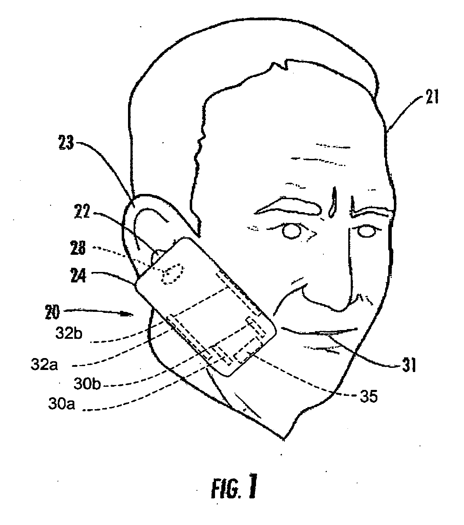

Referring initially to FIGS. 1 through 4, a mobile wireless communications device, such as a cellular telephone **20,** is for a user **21.** In some applications, the user **21** may be wearing an electronic hearing aid **22** in an ear **23** of the user. In particular, the cellular telephone **20** may advantageously provide desired hearing aid compatibility (HAC) for users with hearing aids in some implementations, as will be discussed further below, but need not be used with hearing aids in all embodiments.

The cellular telephone **20** illustratively includes a portable housing **24** and an audio output transducer **28** (e.g., a speaker) carried by the housing and accessible to the electronic hearing aid **22** of the user **21** adjacent the top of the housing as shown. An audio input transducer (e.g., microphone) is also carried by the housing **24** and accessible to a mouth **31** of the user **21** adjacent the bottom of the housing. Although described herein with reference to a cellular device, it should be noted that the present disclosure may be applicable to other wireless communications devices such as wireless LAN devices, etc.

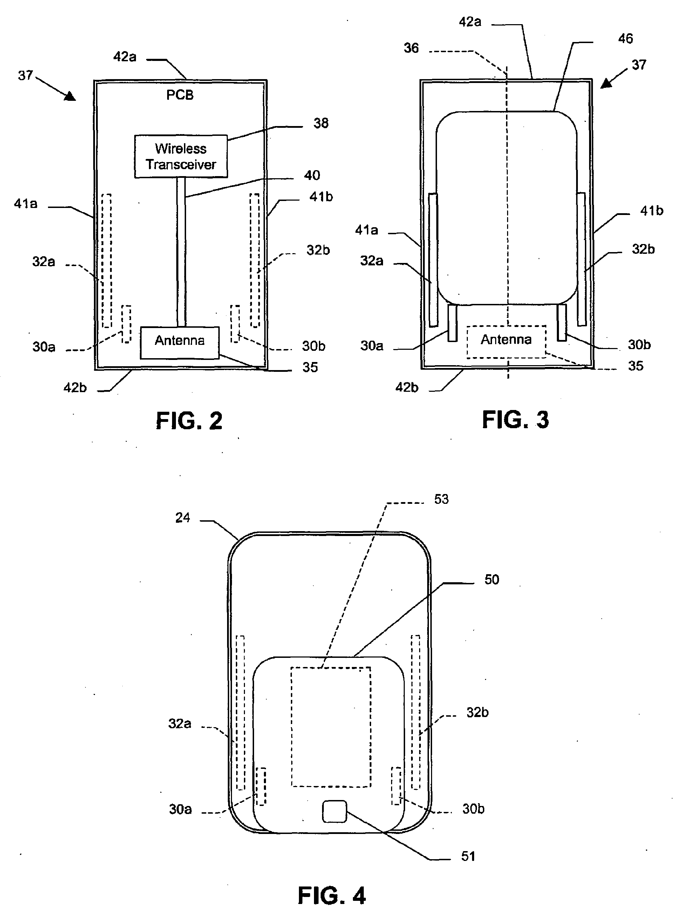

The cellular telephone **20** further illustratively includes a printed circuit board (PCB) **37** carried by the housing **24,** and an antenna **35** and a wireless (e.g., cellular) transceiver **38** carried on a front and/or back surface of the PCB. Of course, these components may be carried on the back surface or in positions other than those shown in other embodiments. The PCB **37** further illustratively includes an antenna feed line **40** connecting the antenna **35** to the wireless transceiver **38.** By way of example, the antenna **35** may be formed by a plurality of conductive traces on the PCB **37** and may take the form of one or more single or multi-feed point antenna elements (monopole, inverted F, etc., for example, as will be appreciated by those skilled in the art. The cellular telephone **20** may further include other components connected to the PCB **37** such as a display, battery **53** (FIG. 4), keypad, processing circuitry, etc., as will be discussed further below.

In the present example, the antenna **35** is positioned adjacent a bottom **42b** of the PCB **37** and therefore the bottom of the housing **24** (i.e., where the input microphone is), which advantageously helps reduce coupling to the electronic hearing aid **22** of the user **21** with respect to traditional top-mounted, internal cellular phone antennas. The PCB 37 also has left and right sides **41a, 41b** as well as a top **42a.** This is because the electronic hearing aid **22** of the user **21** is advantageously further separated from the antenna **35** when the cellular telephone **20** is held adjacent the user's ear **23** than would otherwise be the case with a typical top-mounted, internal cellular telephone antenna, for example. Moreover, this antenna placement also helps space the antenna **35** farther apart from the user's brain, which in turn helps to reduce the SAR of the cellular telephone **20** again with a respect to a traditional top-mounted, internal cellular phone antenna. However, it should be noted that a top-mounted or other antenna placement may be used in some embodiments.

Nonetheless, if the portable housing **24** has a relatively small form factor or footprint for user convenience, this means that the antenna **35** may still be positioned relatively close to the user's ear **23,** thus potentially elevating the SAR or coupling to the hearing aid **22** to unacceptable levels. As such, the cellular telephone **20** may therefore advantageously include first and second pairs of electrically floating, electrically conductive, antenna beam shaping elements **30a, 30b** and **32a, 32b** for helping to direct the beam pattern of the antenna **35** away from the user and the hearing aid **22,** as will be appreciated by those skilled in the art. The first and second pairs of beam shaping elements **30a, 30b** and **32a, 32b** advantageously define a two-stage antenna coupling configuration. It should be noted that additional pairs of beams shaping elements may also be used in some embodiments.

Generally speaking, the first pair of antenna beam shaping elements **30a, 30b** are positioned in an offset relationship relative to the second pair of antenna beam shaping elements **32a, 32b.** In the present example, the two pairs are laterally offset from one another. That is, they are laterally offset or spaced apart from one another from left to right in the plane of the page. Moreover, the first and second pairs of antenna beam shaping elements **30a, 30b** and **32a, 32b** may be co-planar, e.g., on a same surface of the portable housing **24,** etc. In other embodiments, one may be positioned on the PCB and the other carried on a surface of the housing **24,** for example. Other configurations are also possible, as will be appreciated by those skilled in the art, and as will be discussed further below.

By way of example, the first and second pairs of antenna beam shaping elements **30a, 30b** and **32a, 32b** may be symmetrically positioned with respect to the antenna **35.** More particularly, the present example each of the first and second pairs of antenna beam shaping elements **30a, 30b** and **32a, 32b** are positioned substantially parallel to a longitudinal axis **36** of the portable housing, as shown in FIG. 3, although other placements may also be possible in different embodiments, as will be appreciated by those skilled in the art.

Each of the first pair of antenna beam shaping elements **30a, 30b** may have a first length, and each of the second pair of antenna beam shaping elements **32a, 32b** may have a second length. In the illustrated embodiment, the second length is greater than the first length By way of example, each beam shaping element **30a, 30b, 32a, 32b** may have a width in a range of about 2 to 15 mm, and a length in a range of about 1 to 10 cm, although other sizes may also be used in some embodiments.

As will be appreciated by those skilled in the art, the size, number, and placement of the first and second pairs of antenna beam shaping elements **30a, 30b** and **32a, 32b** will have an effect on the performance of the antenna **35.** Thus, the particular size/number/placement selection may vary depending upon the given implementation and the applicable antenna performance characteristics. It should also be noted that the second pair of beam shaping **32a, 32b** need not be longer than the first pair in all embodiments (i.e., the pairs may be the same length or the second pair shorter than the first).

As shown in FIG. 4, the cellular telephone **20** illustratively includes a battery **53** carried within the portable housing **24** and removably connected to the PCB **37,** and a removable access panel **50** provides access to the battery. A release button or catch **51** (or other suitable element) may be included for securing the panel **50** in place. In the illustrated embodiment, the first pair of antenna beam shaping elements **30a, 30b** is secured to the inner surface of the removable access panel **50,** and the second pair of beam shaping elements **32a, 32b** are carried on the inner surface of the back side of the portable housing directly adjacent the removable access panel. The use of such a two-stage beam shaping element configuration advantageously allows the configuration to be adapted to different form factors and housing shapes/sizes. That is, the first and second pairs of beam shaping elements **30a, 30b** and **32a, 32b** can advantageously be positioned to accommodate different shapes and sizes of battery access panels **50** and form factors, as will be appreciated by those skilled in the art. In some embodiments, one or both pairs of the beam shaping elements may also be positioned on the sides of the housing **24.**

In the exemplary embodiment, the beam shaping elements **30a, 30b** and **32a, 32b** are generally rectangular metal layers that are secured to the inner surfaces of the access panel **50** and portable housing **24,** respectively, with an adhesive layer. However, the beam shaping elements **30a, 30b** and **32a, 32b** may take different shapes in different embodiments, and may be secured to the housing **24,** access panel **50,** PCB **37,** etc. by suitable methods of attachment other than an adhesive. For example, the beam shaping elements **30a, 30b** may be printed on the housing/access panel/PCB with conductive ink, similar to conductive circuit traces on a circuit board, as will be appreciated by those skilled in the art.

In some embodiments, it may be desirable to place a cover layer (not shown) on or more of the beam shaping elements **30a, 30b, 32a, 32b,** and particularly if the element(s) is going to be placed on an outside surface of the portable housing **24.** The cover layer may be a dielectric layer, such as a dielectric tape layer, for example. The cover layer(s) may advantageously help protect the beam shaping elements so that they are not damaged or altered such that SAR and/or HAC performance is potentially degraded. Moreover, the cover layer(s) may also advantageously conceal the beam shaping elements, for example, by making the cover layer the same color as a color of the portable housing **24** and/or the access panel **50,** as will be appreciated by those skilled in the art.

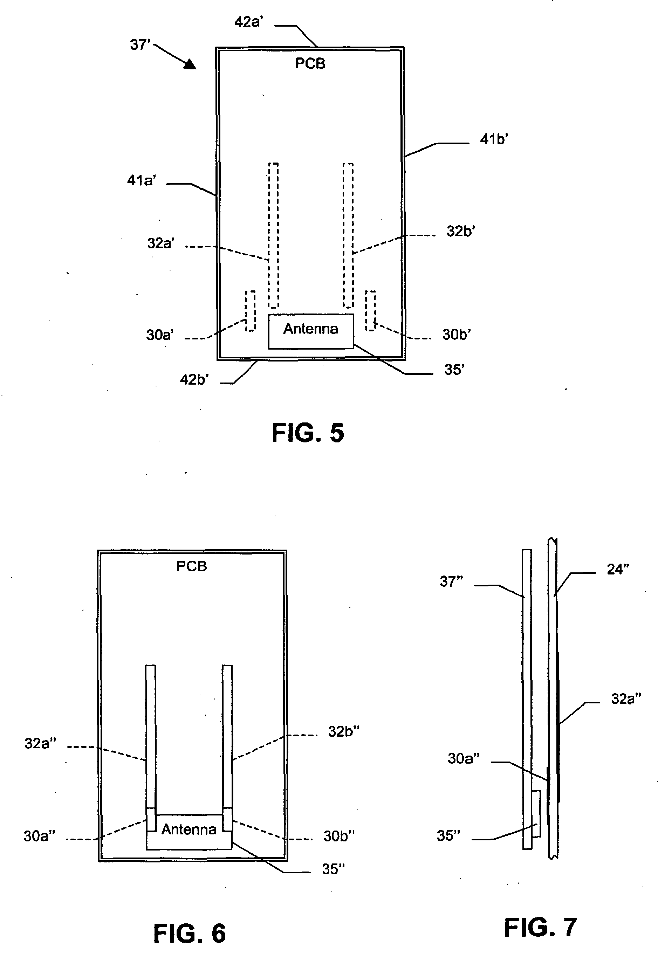

Referring now to FIG. 5, an alternative embodiment is shown in which the second pair of beam shaping elements **32a', 32b'** are positioned between the first pair of beam shaping elements. As can be seen in the present embodiment and the embodiment discussed above, the first pair of beam shaping elements **30a', 30b'** have respective ends that extend beyond respective ends of the second pair of beam shaping elements **32a', 32b'.**

Still another alternative embodiment is now described with reference to FIGS. 6 and 7. Here, the first pair of beam shaping elements **30a", 30b"** are positioned in a vertically offset relationship relative to the second pair of beam shaping elements **32a", 32b",** as perhaps best seen in FIG. 7. Stated alternatively, the first pair of beam shaping elements **30a", 30b"** are positioned vertically above the antenna **35",** and the second pair of beam shaping elements **32a", 32b"** are positioned vertically above the first pair of beam shaping elements.

In the illustrated example, this is accomplished by positioning the first pair of beam shaping elements **30a", 30b"** on the inner surface of the front side of the portable housing **24",** and the second pair of beam shaping elements **32a", 32b"** is positioned on the outer surface of the front side of the portable housing, as shown. However, in other embodiments the first and/or second pairs of beam shaping elements **30a", 30b"** and **32a", 32b"** could be positioned vertically beneath the antenna **35"** (e.g., on the back side of the PCB **37"** and/or inner/outer surfaces of the back side of the portable housing **24"**). In the present example, the first and second pairs of beam shaping elements **30a", 30b"** and **32a", 32b"** also partially overlap, but as noted above an overlap is not required in all embodiments.

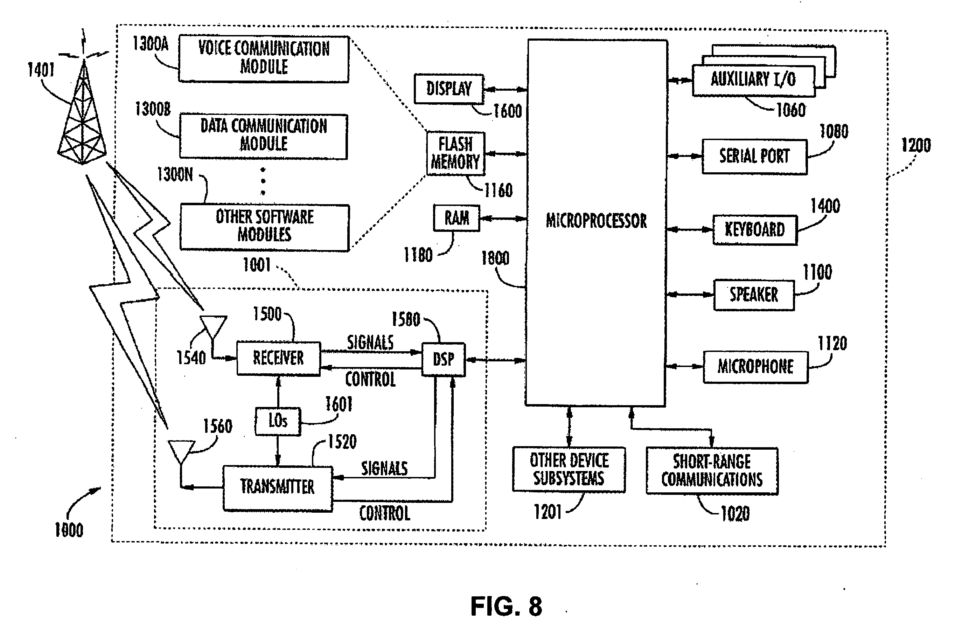

Other exemplary components of a hand-held mobile wireless communications device **1000** are now described in the example below with reference to FIG. 8. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 8. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device comprising:
a portable housing (24);
a printed circuit board (PCB) (37) carried within said portable housing (24);
wireless transceiver circuitry (38) carried by said PCB (37) within said portable housing (24);
an antenna (35) carried by said PCB within said portable housing and connected to said wireless transceiver circuitry;
a first pair (30a, 30b) of elongate, electrically floating, electrically conductive, spaced apart, antenna beam shaping elements adjacent said antenna (35) and spaced apart therefrom; and
a second pair (32a, 32b) of elongate, electrically floating, electrically conductive, spaced apart, antenna beam shaping elements adjacent said antenna (35) and spaced apart therefrom;
said first pair (30a, 30b) of antenna beam shaping elements being positioned in an offset and spaced apart relationship relative to said second pair (32a, 32b) of antenna beam shaping elements and at least one of said first and second pairs (30a, 30b, 32a, 32b) of beam shaping elements being secured to a surface of said portable housing (24);
each of the first and second pairs of antenna beam shaping elements (30a, 30b, 32a, 32b) being positioned parallel to an axis (36);
each of said first pair of antenna beam shaping elements having a first length, and each of said second pair of antenna beam shaping elements having a second length greater than the first length;
said first pair of antenna beam shaping elements having respective ends extending beyond respective ends of said second pair of antenna beam shaping elements when considered in a direction parallel to the axis.

2. The mobile wireless communications device of Claim 1 wherein said first and second pairs (30a, 30b, 32a, 32b) of beam shaping elements are each symmetrically positioned with respect to said antenna (35).

3. The mobile wireless communications device of Claim 1 wherein said first pair (30a, 30b) of antenna beam shaping elements is positioned in a plane offset relative to said second pair (32a, 32b) of antenna beam shaping elements.

4. The mobile wireless communications device of Claim 3 wherein said first and second pairs of beam shaping elements at least partially overlap.

5. The mobile wireless communications device of Claim 1 wherein said first and second pairs of beam shaping elements are co-planar.

6. The mobile wireless communications device of Claim 1 wherein each of said antenna beam shaping elements comprises at least one generally rectangular metal layer.

7. The mobile wireless communications device of Claim 1 further comprising a battery (53) carried within said portable housing and connected to said PCB; and wherein said portable housing comprises a battery access panel (50) to which at least one of said first and second pairs of beam shaping elements is secured.

8. The mobile wireless communications device of Claim 1 wherein said PCB has a top portion and a bottom portion; and wherein said antenna (35) is carried by the bottom portion of said PCB.

9. A method for making a mobile wireless communications device comprising:
positioning wireless transceiver circuitry (38) and an antenna (35) on a printed circuit board PCB (37) and electrically connecting the antenna to the wireless transceiver circuitry;
positioning the printed circuit board (37) within a portable housing (24);
positioning a first pair (30a, 30b) of elongate, electrically floating, electrically conductive, spaced apart, antenna beam shaping elements adjacent the antenna (35) and spaced apart therefrom; and
positioning a second pair (32a, 32b) of elongate, electrically floating, electrically conductive, spaced apart, antenna beam shaping elements adjacent the antenna (35) and spaced apart therefrom;
each of the first and second pairs of antenna beam shaping elements (30a, 30b, 32a, 32b) being positioned parallel to an axis;
the first pair (30a, 30b) of antenna beam shaping elements being positioned in an offset and spaced apart relationship relative to the second pair (32a, 32b) of antenna beam shaping elements and at least one of said first and second pairs of beam shaping elements being secured to a surface of said portable housing (25);
each of the first pair of antenna beam shaping elements having a first length, and each of the second pair of antenna beam shaping elements having a second length greater than the first length;
the first pair of antenna beam shaping elements having respective ends extending beyond respective ends of the second pair of antenna beam shaping elements when considered in a direction parallel to the axis.

10. The method of Claim 9 wherein the first and second pairs of beam shaping elements (30a, 30b, 32a, 32b) are each symmetrically positioned with respect to the antenna (35).

11. The method of Claim 9 wherein the first pair of antenna beam shaping elements is positioned in a plane offset relative to the second pair of antenna beam shaping elements.

12. The method of Claim 9 wherein the first and second pairs of beam shaping elements at least partially overlap.

13. The method of Claim 9 wherein the first and second pairs of beam shaping elements are co-planar.

## Patentansprüche

1. Mobile drahtlose Kommunikationsvorrichtung, die aufweist:
ein tragbares Gehäuse (24);
eine Leiterplatte (PCB - printed circuit board) (37), die in dem tragbaren Gehäuse (24) angebracht ist;
eine drahtlose Transceiver-Schaltung (38), die durch die PCB (37) in dem tragbaren Gehäuse (24) angebracht ist;
eine Antenne (35), die durch die PCB (37) in dem tragbaren Gehäuse angebracht ist und die mit der drahtlosen Transceiver-Schaltung verbunden ist;
ein erstes Paar (30a, 30b) von länglichen, elektrisch schwebenden, elektrisch leitfähigen, mit Abstand zueinander angeordneten
Antennenstrahl-formenden Elementen, angrenzend an die Antenne (35) und von dieser mit Abstand angeordnet; und
ein zweites Paar (32a, 32b) von länglichen, elektrisch schwebenden, elektrisch leitfähigen, mit Abstand zueinander angeordneten
Antennenstrahl-formenden Elementen, angrenzend an die Antenne (35) und von dieser mit Abstand angeordnet;
wobei das erste Paar (30a, 30b) von Antennenstrahl-formenden Elementen in einem versetzten und beabstandeten Verhältnis relativ zu dem zweiten Paar (32a, 32b) von Antennenstrahl-formenden Elementen positioniert ist und zumindest eines der ersten und zweiten Paare (30a, 30b, 32a, 32b) der Strahl-formenden Elemente an einer Oberfläche des tragbaren Gehäuses (24) angebracht ist;
wobei jedes der ersten und zweiten Paare der Antennenstrahl-formenden Elemente (30a, 30b, 32a, 32b) parallel zu einer Achse (36) positioniert ist;
wobei jedes des ersten Paares der Antennenstrahl-formenden Elemente eine erste Länge hat, und jedes des zweiten Paares der Antennenstrahl-formenden Elemente eine zweite Länge hat, die größer als die erste Länge ist;
wobei das erste Paar von Antennenstrahl-formenden Elementen jeweilige Enden hat, die sich über jeweilige Enden des zweiten Paares von Antennenstrahl-formenden Elementen hinaus erstrecken, bei Betrachtung in einer zu der Achse parallelen Richtung.

2. Mobile drahtlose Kommunikationsvorrichtung gemäß Anspruch 1, wobei die ersten und zweiten Paare (30a, 30b, 32a, 32b) der Strahl-formenden Elemente jeweils symmetrisch hinsichtlich der Antenne (35) positioniert sind.

3. Mobile drahtlose Kommunikationsvorrichtung gemäß Anspruch 1, wobei das erste Paar (30a, 30b) der Antennenstrahl-formenden Elemente in einer Ebene positioniert ist, die relativ zu dem zweiten Paar (32a, 32b) der Antennenstrahl-formenden Elemente versetzt ist.

4. Mobile drahtlose Kommunikationsvorrichtung gemäß Anspruch 3, wobei die ersten und zweiten Paare der Strahl-formenden Elemente sich zumindest teilweise überlappen.

5. Mobile drahtlose Kommunikationsvorrichtung gemäß Anspruch 1, wobei die ersten und zweiten Paare der Strahl-formenden Elemente koplanar sind.

6. Mobile drahtlose Kommunikationsvorrichtung gemäß Anspruch 1, wobei jedes der Antennenstrahl-formenden Elemente zumindest eine im Allgemeinen rechteckige Metallschicht aufweist.

7. Mobile drahtlose Kommunikationsvorrichtung gemäß Anspruch 1, die weiter aufweist eine Batterie (53), die in dem tragbaren Gehäuse aufgenommen ist und mit der PCB verbunden ist; und wobei das tragbare Gehäuse einen Batteriezugangsdeckel (50) aufweist, an dem zumindest eines der ersten und zweiten Paare von Strahl-formenden Elementen angebracht ist.

8. Mobile drahtlose Kommunikationsvorrichtung gemäß Anspruch 1, wobei die PCB einen oberen Teil und einen unteren Teil hat; und wobei die Antenne (35) durch den unteren Teil der PCB getragen wird.

9. Verfahren zur Herstellung einer mobilen drahtlosen Kommunikationsvorrichtung, das aufweist:
Positionieren einer drahtlosen Transceiver-Schaltung (38) und einer Antenne (35) auf einer Leiterplatte (PCB - printed circuit board) (37) und elektrisches Verbinden der Antenne mit der drahtlosen Transceiver-Schaltung;
Positionieren der Leiterplatte (37) in einem tragbaren Gehäuse (24); Positionieren eines ersten Paares (30a, 30b) von länglichen, elektrisch schwebenden, elektrisch leitfähigen, mit Abstand zueinander angeordneten Antennenstrahl-formenden Elementen angrenzend an die Antenne (35) und von dieser mit Abstand; und
Positionieren eines zweiten Paares (32a, 32b) von länglichen, elektrisch schwebenden, elektrisch leitfähigen, mit Abstand zueinander angeordneten Antennenstrahl-formenden Elementen angrenzend an die Antenne (35) und von dieser mit Abstand;
wobei jedes der ersten und zweiten Paare der Antennenstrahl-formenden Elemente (30a, 30b, 32a, 32b) parallel zu einer Achse positioniert ist;
wobei das erste Paar (30a, 30b) von Antennenstrahl-formenden Elementen in einem versetzten und beabstandeten Verhältnis relativ zu dem zweiten Paar (32a, 32b) von Antennenstrahl-formenden Elementen positioniert ist und zumindest eines der ersten und zweiten Paare der Strahl-formenden Elemente an einer Oberfläche des tragbaren Gehäuses (24) angebracht ist;
wobei jedes des ersten Paares der Antennenstrahl-formenden Elemente eine erste Länge hat, und jedes des zweiten Paares der Antennenstrahl-formenden Elemente eine zweite Länge hat, die größer als die erste Länge ist;
wobei das erste Paar von Antennenstrahl-formenden Elementen jeweilige Enden hat, die sich über jeweilige Enden des zweiten Paares von Antennenstrahl-formenden Elementen hinaus erstrecken, bei Betrachtung in einer zu der Achse parallelen Richtung.

10. Verfahren gemäß Anspruch 9, wobei die ersten und zweiten Paare (30a, 30b, 32a, 32b) der Strahl-formenden Elemente jeweils symmetrisch hinsichtlich der Antenne (35) positioniert sind.

11. Verfahren gemäß Anspruch 9, wobei das erste Paar der Antennenstrahl-formenden Elemente in einer Ebene positioniert ist, die relativ zu dem zweiten Paar der Antennenstrahl-formenden Elemente versetzt ist.

12. Verfahren gemäß Anspruch 9, wobei die ersten und zweiten Paare der Strahl-formenden Elemente sich zumindest teilweise überlappen.

13. Verfahren gemäß Anspruch 9, wobei die ersten und zweiten Paare der Strahl-formenden Elemente koplanar sind.

## Revendications

1. Dispositif de communication mobile sans fil comprenant :
un boîtier portatif (24) ;
une carte de circuits imprimés (37) supportée dans ledit boîtier portatif (24) ;
un ensemble de circuits émetteurs-récepteurs sans fil (38) porté par ladite carte de circuits imprimés (37) dans ledit boîtier portatif (24) ;
une antenne (35) portée par ladite carte de circuits imprimés (37) dans ledit boîtier portatif et connectée audit ensemble de circuits émetteurs-récepteurs sans fil ;
une première paire (30a, 30b) d'éléments de formation du faisceau d'antenne, de forme allongée, flottants électriquement, conducteurs électriquement, écartés les uns des autres, adjacents à ladite antenne (35) et écartés de celle-ci ; et
une seconde paire (32a, 32b) d'éléments de formation du faisceau d'antenne, de forme allongée, flottants électriquement, conducteurs électriquement, écartés les uns des autres, adjacents à ladite antenne (35) et écartés de celle-ci ;
ladite première paire (30a, 30b) d'éléments de formation du faisceau d'antenne étant positionnée de manière à être décalée et écartée par rapport à ladite seconde paire (32a, 32b) d'éléments de formation du faisceau d'antenne et au moins une desdites première et seconde paires (30a, 30b, 32a, 32b) d'éléments de formation du faisceau étant fixée sur une surface dudit boîtier portatif (24) ;
chacune desdites première et seconde paires d'éléments de formation du faisceau d'antenne (30a, 30b, 32a, 32b) étant positionnée parallèlement à un axe (36) ;
chaque élément de la première paire d'éléments de formation du faisceau d'antenne ayant une première longueur et chaque élément de la seconde paire d'éléments de formation du faisceau d'antenne ayant une seconde longueur, supérieure à la première longueur ;
ladite première paire d'éléments de formation du faisceau d'antenne ayant des extrémités respectives qui s'étendent au-delà d'extrémités respectives de ladite seconde paire d'éléments de formation du faisceau d'antenne si on les considère dans une direction parallèle à l'axe.

2. Dispositif de communication mobile sans fil selon la revendication 1, dans lequel chacune desdites première et seconde paires (30a, 30b, 32a, 32b) d'éléments de formation du faisceau d'antenne est positionnée symétriquement par rapport à ladite antenne (35).

3. Dispositif de communication mobile sans fil selon la revendication 1, dans lequel ladite première paire (30a, 30b) d'éléments de formation du faisceau d'antenne est positionnée dans un plan décalé par rapport à ladite seconde paire (32a, 32b) d'éléments de formation du faisceau d'antenne.

4. Dispositif de communication mobile sans fil selon la revendication 3, dans lequel lesdites première et seconde paires d'éléments de formation du faisceau d'antenne sont au moins partiellement superposées.

5. Dispositif de communication mobile sans fil selon la revendication 1, dans lequel lesdites première et seconde paires d'éléments de formation du faisceau d'antenne sont coplanaires.

6. Dispositif de communication mobile sans fil selon la revendication 1, dans lequel chacun desdits éléments de formation du faisceau d'antenne est constitué d'au moins une couche métallique généralement rectangulaire.

7. Dispositif de communication mobile sans fil selon la revendication 1, comprenant en outre une batterie (53) portée dans ledit boîtier portatif et connectée à ladite carte de circuits imprimés et dans lequel ledit boîtier portatif comprend un panneau d'accès à la batterie (50) sur lequel sont fixés au moins l'une des première et seconde paires d'éléments de formation du faisceau.

8. Dispositif de communication mobile sans fil selon la revendication 1, dans lequel ladite carte de circuits imprimés a une partie supérieure et une partie inférieure et dans lequel ladite antenne (35) est portée par ladite partie inférieure de ladite carte de circuits imprimés.

9. Procédé de fabrication d'un dispositif de communication mobile sans fil, comprenant les étapes consistant à :
positionner un ensemble de circuits émetteurs-récepteurs sans fil (38) et une antenne (35) sur une carte de circuits imprimés (37) et connecter électriquement l'antenne à l'ensemble de circuits émetteurs-récepteurs sans fil (38) ;
positionner la carte de circuits imprimés (37) dans un boîtier portatif (24) ;
positionner une première paire (30a, 30b) d'éléments de formation du faisceau d'antenne, de forme allongée, flottants électriquement, conducteurs électriquement, écartés les uns des autres, adjacents à l'antenne (35) et écartés de celle-ci ; et
positionner une seconde paire (32a, 32b) d'éléments de formation du faisceau d'antenne, de forme allongée, flottants électriquement, conducteurs électriquement, écartés les uns des autres, adjacents à l'antenne (35) et écartés de celle-ci ;
chacune desdites première et seconde paires d'éléments de formation du faisceau d'antenne (30a, 30b, 32a, 32b) étant positionnée parallèlement à un axe ;
la première paire (30a, 30b) d'éléments de formation du faisceau d'antenne étant positionnée de manière à être décalée et écartée par rapport à la seconde paire (32a, 32b) d'éléments de formation du faisceau d'antenne et au moins une desdites première et seconde paires d'éléments de formation du faisceau étant fixée sur une surface dudit boîtier portatif (24) ;
chaque élément de la première paire d'éléments de formation du faisceau d'antenne ayant une première longueur et chaque élément de la seconde paire d'éléments de formation du faisceau d'antenne ayant une seconde longueur, supérieure à la première longueur ;
la première paire d'éléments de formation du faisceau d'antenne ayant des extrémités respectives qui s'étendent au-delà d'extrémités respectives de la seconde paire d'éléments de formation du faisceau d'antenne si on les considère dans une direction parallèle à l'axe.

10. Procédé selon la revendication 9, dans lequel chacune desdites première et seconde paires (30a, 30b, 32a, 32b) d'éléments de formation du faisceau d'antenne est positionnée symétriquement par rapport à ladite antenne (35).

11. Procédé selon la revendication 9, dans lequel la première paire d'éléments de formation du faisceau d'antenne est positionnée dans un plan décalé par rapport à la seconde paire d'éléments de formation du faisceau d'antenne.

12. Procédé selon la revendication 9, dans lequel les première et seconde paires d'éléments de formation du faisceau d'antenne sont au moins partiellement superposées.

13. Procédé selon la revendication 9, dans lequel les première et seconde paires d'éléments de formation du faisceau d'antenne sont coplanaires.
